# EUROPEAN PATENT SPECIFICATION

(11) **EP 3 590 395 B1**
(45) Date of publication and mention of the grant of the patent: **21.02.2024**
(21) Application number: 19183213.8
(22) Date of filing: 28.06.2019
(51) Int. Cl.: A47J 31/36

(54) **INJECTOR NEEDLE**
INJEKTORNADEL
AIGUILLE D'INJECTEUR

(30) Priority: 06.07.2018 BR 202018013929 U
(43) Date of publication of application: 08.01.2020
(73) Proprietor: Café Três Corações S/A, 33170-000 Santa Luzia (BR)
(72) Inventor: ROCHA-SIEGENTHALER, Cédric Pascal Santana, 8872 St. Gallen (CH)
(74) Representative: Casalonga

(56) References cited:
- EP-A1- 1 153 561
- WO-A1-2015/170288
- CH-B1- 697 407
- US-A1- 2002 004 643

## Description

### FIELD OF THE INVENTION

The present invention refers to a constructive arrangement applied to an injector needle. More precisely, the present invention refers to a constructive arrangement applied to an injector needle used in machines for preparing drinks from capsules.

### BACKGROUND OF THE INVENTION

Injector needles, or simply needles, are widely used in machines for preparing drinks from capsules.

The main function of the injector needles is to perforate the capsule and inject heated fluid at high pressure inside, in order to prepare a drink by means of extraction or dissolution of ingredients, such as coffee powder, granulated coffee, cocoa powder, powdered milk, leaves, fruits, among others. Commonly, said fluid is pressurized hot water.

Generally speaking, an extractor needle is responsible for extracting the drink prepared from inside the capsule, which is subsequently directed towards a suitable recipient, such as a cup or a beaker.

As known by persons skilled in the art, injector needles are commonly encased or fixed to a needle support, which in turn is encased or fixed in the machine for preparing drinks. The needle support is then connected by means of tubes and valves, or equivalent elements, to the heating unit, which is responsible for supplying hot pressurized water to the injector needle and, consequently, inside the capsule.

Injector needles known in the state of the art are designed to prepare coffee, the drink accounting for the lion's share of the market of drinks prepared from capsules.

An example of injector needle known in the state of the art may be noted in document CN206507792. Said needle presents a central outlet that injects a flow of water into the capsule, perpendicular to the capsule base.

Although this type of flow is satisfactory for preparing just coffee or drinks whose primary ingredient is coffee, it is noted that this arrangement is often not satisfactory for preparing other drinks.

Disadvantageously, it is seen that the preparation of drinks containing powdered milk or similar ingredients has drawbacks still not overcome by the state of the art.

More specifically, the ingredients for preparing milk-based drinks usually form solid blocks inside the capsule, which do no dissolve, even in contact with hot water at high pressure. As a result, not only is the flavor of these drinks impaired, but there is also the waste of undissolved or badly extracted ingredients.

Document EP 1 153 561 A1 (see Fig. 5) discloses an injector needle according to the preamble of claim 1.

Therefore, the state of the art has no suitable injector needle for providing a flow of pressurized hot water to capsules for preparing drinks comprising milk-based ingredients or the like, such as coffee with milk, cappuccino, and chocolate-mix beverages, among others.

Generally, the state of the art lacks technical solutions for suitably dissolving and/or extracting milk-based ingredients or the like contained in capsules for preparing drinks.

### DESCRIPTION OF THE INVENTION

It is an objective of the present invention to provide a suitable injector needle for supplying a flow of pressurized hot water to capsules for preparing drinks comprising milk-based ingredients or the like, such as coffee with milk, cappuccino, and chocolate-mix products, among others.

Another objective of the present invention is to provide a suitable injector needle for dissolving and extracting milk-based ingredients or the like in capsules for preparing drinks, enhancing the flavor of the ready-to-drink beverages and preventing wastage of undissolved or badly extracted ingredients.

One or more objectives of the present invention mentioned above, among others, are achieved by way of an injector needle as defined in claim 1.

### BRIEF DESCRIPTION OF THE DRAWINGS

The objectives, technical effects and advantages of the present invention will be apparent to persons skilled in the art from the detailed description ahead which refers to the accompanying drawings that illustrate the invention:
Figure 1 is a perspective view of the injector needle that is the object of the present invention;
Figure 2 is a top view of the injector needle that is the object of the invention;
Figure 3 is a bottom view of the injector needle that is the object of the invention;
Figure 4 is a front view of the injector needle that is the object of the invention;
Figure 5 is a front view of the A-A cut of the injector needle illustrated in figure 4; and
Figure 6 is a right-side view of the injector needle that is the object of the invention.

### DESCRIPTION OF EMBODIMENTS OF THE INVENTION

At the outset, it has to be emphasized that the injector needle 1, that is the object of the present invention, will be described below according to the embodiments represented in the accompanying drawings, said embodiments not being limitative.

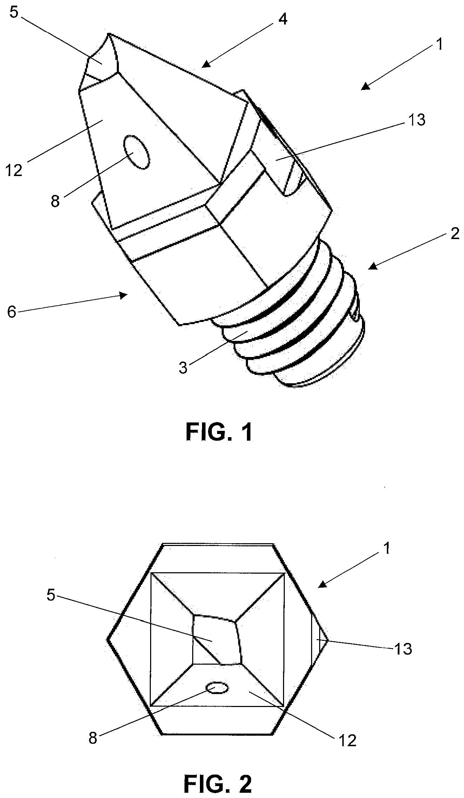

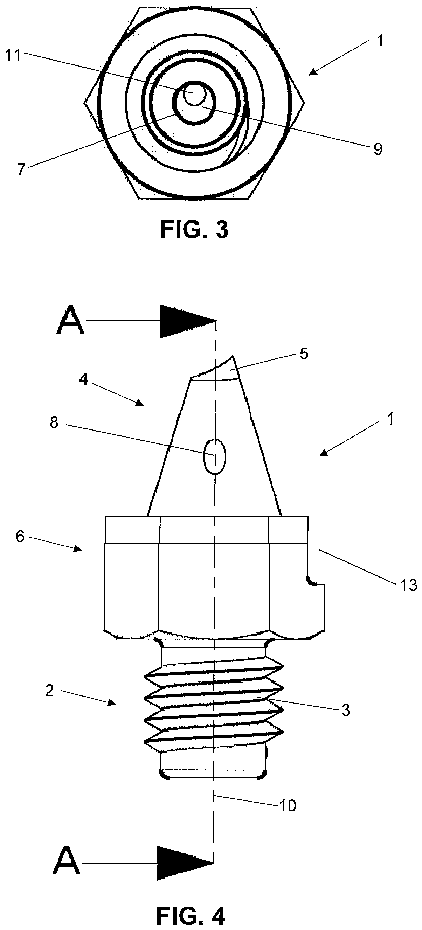

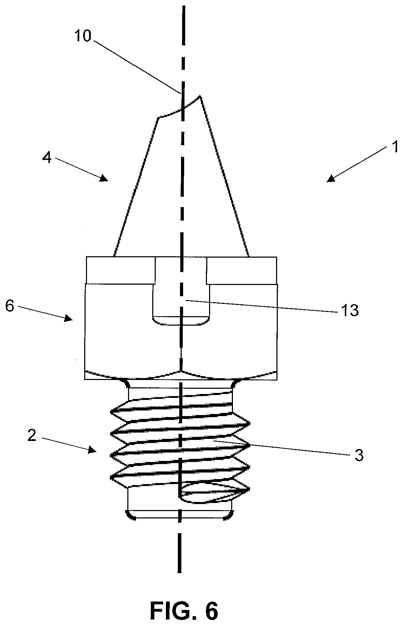

As can be seen in figures 1 to 6, the injector needle 1 comprises a first end 2 endowed with a fastening means 3, a second end 4 endowed with a tip 5 and a central portion 6 interconnecting the first 2 and second 4 ends.

The function of the fastening means 3 is to establish a mechanical and fluid connection between the injector needle 1 and the machine for preparing drinks from capsules (not illustrated).

More specifically, the fastening means 3 establishes a mechanical and fluid connection between the injector needle 1 and a needle support (not illustrated), which can be connected to a heating unit of the machine (not illustrated). As stated previously, the heating unit is responsible for supplying pressurized hot water to the injector needle 1 and, consequently, inside the capsule.

In an embodiment of the present invention, the first end 2 is endowed with a substantially cylindrical shape, and the fastening means 3 are M5 threads formed on the surface of the first end 2.

Obviously, the use of threads as fastening means 3 of the injector needle 1 does not represent a limitation or obligation of the present invention, such that a person skilled in the art may select the fastening means he/she understands most recommendable in accordance with the design and with the teachings of the present invention.

The function of the tip 5 of the injector needle 1 is to perforate a seal of the capsule for preparing drinks, enabling the injector needle 1 to apply pressurized hot water inside the capsule. Generally, the seal of the capsule comprises a plastic or metal film.

In the embodiment illustrated by figures 1 to 6, the tip 5 is pointed. However, a person skilled in the art will immediately perceive that the tip 5 can be serrated or even blunt, provided that it satisfactorily meets the function of perforating the seal of the capsule and of injecting pressurized hot water into the capsule.

In an embodiment of the present invention, the central portion 6 consists of a hexagonal central portion.

Obviously, the hexagonal geometry of the central portion does not represent a limitation or obligation for the invention. Accordingly, a person skilled in the art may choose other geometries for the central portion according to the needs of each project, such as, for example, a cylinder or square.

The function of the central portion 6 is to make the interconnection between the first 2 and second 4 ends. The central portion 6 is endowed with a recess 13.

The injector needle 1 can be modular or can be made of a single part, according to the specifications of each project. A non-limitative example of modular injector needle 1 comprises the first end 2, the central portion 6 and the second end 4 made as independent parts connected to each other to form the injector needle 1.

A free portion/base of the first end 2 comprises an inlet orifice 7 and the second end 4 comprises an outlet orifice 8.

The second end 4 comprises a face 12 slanted at an α angle in relation to the longitudinal axis 10 of the injector needle 1. In other words, the slanted face 12 does not extend in parallel to the longitudinal axis 10 of the injector needle 1.

In an embodiment of the present invention illustrated by figures 1 to 6, the second end 4 is in the shape of a square-based pyramid trunk. A person skilled in the art will immediately envisage other possible formats for the second end 4, such as, for example, a triangular-base pyramid trunk.

The outlet orifice 8 is disposed on the slanted face 12.

According to the teachings of the present invention, the injector needle 1 further comprises a first inner channel 9 extending in parallel to a longitudinal axis 10 of the injector needle 1. The first inner channel 9 extends from the inlet orifice 7 and fluidly connects to a second inner channel 11.

The second inner channel 11 is slanted at a β angle in relation to the longitudinal axis 10 of the injector needle 1 and extends to the outlet orifice 8.

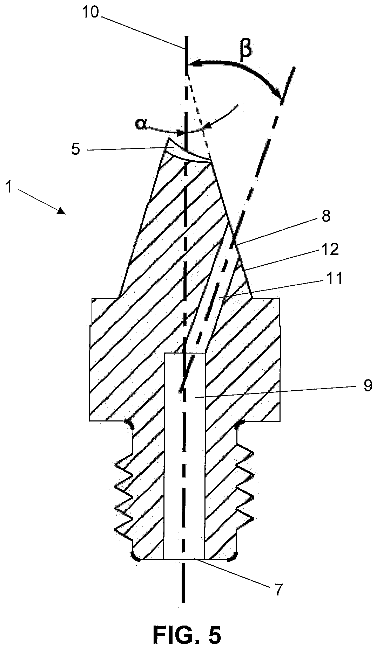

As can be noted in figure 5, a fluid connection between the inlet orifice 7, the first inner channel 9, the second inner channel 11 and the outlet orifice 8 define a path for a flow of pressurized hot water, which can be subsequently injected into the capsule for preparing drinks.

In an embodiment of the present invention, the β angle between the second inner channel 11 and the longitudinal axis 10 is comprised in the range between 5° and 90°.

The slant of the second inner channel 11 in relation to the longitudinal axis 10 provides for the creation of a turbulent flow of water into the capsule when it is injected by means of the injector needle 1. Said turbulent flow provides improved dissolution and/or extraction of the ingredients contained inside the capsule. Accordingly, any solid blocks formed by milk-based ingredients or the like can be efficiently dissolved and/or extracted and destined for ready-to-drink beverage.

In another embodiment of the present invention, the α angle between the face 12 and the longitudinal axis 10 is comprised in the range between 5° and 90°.

The slant of the slanted face 12 facilitates the withdrawal of the injector needle 1 from the capsule after perforating the seal and preparing the drink, besides minimizing the risk that any seal fragments from the capsule stick to the injector needle 1 or block the outlet orifice 8.

The diameter of the first inner channel 9 is greater than the diameter of the second inner channel 11. In particular, the diameter of the first inner channel 9 is comprised in the range between 1.3 and 1.8 mm, whereas the diameter of the second inner channel 11 is comprised in the range between 0.6 and 1.2 mm.

The difference between the diameters of the first 9 and second 11 inner channels enables an increase in the water pressure between the first 9 and the second 11 inner channels. This increase in water pressure helps maintain the turbulent flow inside the capsule as the drink is prepared, enabling improved extraction/dissolution of the ingredients.

In an embodiment of the present invention, the injector needle has a height, that is, the distance between the base of the first end 2 and the tip 5, of 15.5 mm. In this embodiment, the first end 2 has a height of 5.1 mm, the central portion 6 has a height of 4.5 mm and the second end 4 has a height of 5.9 mm.

Preferably, the injector needle 1 is made of ceramic materials. However, other materials can be used, such as plastics or metal alloys, provided they support the working conditions of the machine for preparing drinks and do not interfere with the organoleptic properties of the ready-to-drink beverages.

Preferably, the injector needle 1 is manufactured from injection processes. However, said manufacturing process does not represent a limitation or obligation of the present invention, such that a person skilled in the art may select the manufacturing process he/she understands most recommendable in accordance with the design and with the teachings of the present invention.

If the injector needle 1 is manufactured from injection, the presence of the recess 13 in the central portion 6 is particularly advantageous. In this context, the recess 13 can serve as an injection point of the material in the injection mold and prevent any burrs or traces stemming from the injection process from interfering with the use or maintenance of the injector needle 1.

For example, if a user wishes to fix to or remove the injector needle 1 from the needle support with the assistance of a ratchet, the recess 13 enables the encasement of the injector needle 1 in the ratchet not to be adversely affected by burrs or traces.

Although the injector needle 1 is suitable for use in machines for preparing drinks comprising milk-based ingredients, a person skilled in the art will perceive that the invention can be applied to preparing drinks without milk-based ingredients, such as *espresso* coffee or tea.

Furthermore, a person skilled in the art will perceive that the invention can be applied to machines not necessarily designed for preparing drinks. As an example, the present invention can be applied to machines for preparing foodstuffs, such as soup or broth.

An advantage of the present invention consists of improved extraction of the ingredients contained inside the capsule, consequently enhancing the flavor of the ready-to-drink beverage and providing greater appeal to consumers.

Another advantage consists of less wastage of the ingredients in the capsule, in view of the improved extraction and/or dissolution provided by the present injector needle 1.

Notwithstanding the description of the particular embodiments above, the present invention can be carried out in similar ways, and the form of implementation may differ, such that the scope of protection of the invention is solely limited by the content of the accompanying claims.

## Claims

1. An injector needle (1), comprising:
a first end (2) endowed with a fastening means (3);
a second end (4) endowed with a tip (5);
a central portion (6) interconnecting the first and second ends (2, 4);
wherein the first end (2) comprises an inlet orifice (7) and the second end (4) comprises an outlet orifice (8);
the injector needle (1) further comprising a first inner channel (9) extending in parallel to a longitudinal axis (10) of the injector needle (1), the first inner channel (9) extending from the inlet orifice (7) and fluidly connecting to a second inner channel (11);
the second inner channel (11) having a β angle slant in relation to the longitudinal axis (10) of the injector needle (1), the second inner channel (11) extending to the outlet orifice (8);
wherein the second end (4) comprises a face (12) slanted at an α angle in relation to the longitudinal axis (10) of the injector needle (1);
wherein the outlet orifice (8) is disposed on the slanted face (12), and wherein the diameter of the first inner channel (9) is greater than the diameter of the second inner channel (11), the difference between the diameter of the first inner channel (9) and the diameter of the second inner channel (11) enables an increase in the water pressure between the first inner channel (9) and the second inner channel (11);
the injector needle (1) being **characterized in that** the central portion (6) is endowed with a recess (13).

2. The needle (1), according to claim 1, **characterized in that** the α angle is comprised in the range between 5° and 90°.

3. The needle (1), according to claim 1, **characterized in that** the β angle is comprised in the range between 5° and 90°.

4. The needle (1), according to claim 1, **characterized in that** the diameter of the first inner channel (9) is comprised in the range between 1.3 mm and 1.8 mm.

5. The needle (1), according to claim 1, **characterized in that** the diameter of the second inner channel (11) is comprised in the range between 0.6 mm and 1.2 mm.

6. The needle (1), according to claim 1, **characterized in that** the fastening means (3) are threads formed on the surface of the first end (2) and the tip (5) is a pointed tip.

## Patentansprüche

1. Injektornadel (1), die umfasst:
ein erstes Ende (2), ausgestattet mit einem Befestigungsmittel (3);
ein zweites Ende (4), ausgestattet mit einer Spitze (5) ;
einen mittleren Abschnitt (6), der das erste und zweite Ende (2, 4) miteinander verbindet,
wobei das erste Ende (2) eine Einlassöffnung (7) und das zweite Ende (4) eine Auslassöffnung (8) umfasst;
wobei die Injektornadel (1) ferner einen ersten inneren Kanal (9) umfasst, der sich parallel zu einer Längsachse (10) der Injektornadel (1) erstreckt, wobei sich der erste innere Kanal (9) von der Einlassöffnung (7) erstreckt und sich fluidtechnisch mit einem zweiten inneren Kanal (11) verbindet;
wobei der zweite innere Kanal (11) eine Winkelneigung β in Bezug auf die Längsachse (10) der Injektornadel (1) aufweist, wobei sich der zweite innere Kanal (11) zu der Auslassöffnung (8) erstreckt;
wobei das zweite Ende (4) eine Seitenfläche (12) umfasst, die mit einem Winkel α in Bezug auf die Längsachse (10) der Injektornadel (1) geneigt ist;
wobei die Auslassöffnung (8) an der geneigten Seitenfläche (12) angeordnet ist, und wobei der Durchmesser des ersten inneren Kanals (9) größer als der Durchmesser des zweiten inneren Kanals (11) ist, wobei die Differenz zwischen dem Durchmesser des ersten inneren Kanals (9) und dem Durchmesser des zweiten inneren Kanals (11) einen Anstieg in dem Wasserdruck zwischen dem ersten inneren Kanal (9) und dem zweiten inneren Kanal (11) ermöglicht;
wobei die Injektornadel (1) **dadurch gekennzeichnet ist, dass** der mittlere Abschnitt (6) mit einem Einschnitt (13) ausgestattet ist.

2. Nadel (1) nach Anspruch 1, **dadurch gekennzeichnet, dass** der Winkel α in dem Bereich zwischen 5° und 90° enthalten ist.

3. Nadel (1) nach Anspruch 1, **dadurch gekennzeichnet, dass** der Winkel β in dem Bereich zwischen 5° und 90° enthalten ist.

4. Nadel (1) nach Anspruch 1, **dadurch gekennzeichnet, dass** der Durchmesser des ersten inneren Kanals (9) in dem Bereich zwischen 1,3 mm und 1,8 mm enthalten ist.

5. Nadel (1) nach Anspruch 1, **dadurch gekennzeichnet, dass** der Durchmesser des zweiten inneren Kanals (11) in dem Bereich zwischen 0,6 mm und 1,2 mm enthalten ist.

6. Nadel (1) nach Anspruch 1, **dadurch gekennzeichnet, dass** das Befestigungsmittel (3) ein Schraubengewinde ist, das auf der Oberfläche des ersten Endes (2) ausgebildet ist, und dass die Spitze (5) eine spitz zulaufende Spitze ist.

## Revendications

1. Aiguille d'injecteur (1), comprenant :
une première extrémité (2) dotée d'un moyen de fixation (3) ;
une deuxième extrémité (4) dotée d'une pointe (5) ;
une partie centrale (6) reliant les première et deuxième extrémités (2, 4) ;
dans laquelle la première extrémité (2) comprend un orifice d'entrée (7) et la deuxième extrémité (4) comprend un orifice de sortie (8) ;
l'aiguille d'injecteur (1) comprenant en outre un premier canal intérieur (9) s'étendant parallèlement à un axe longitudinal (10) de l'aiguille d'injecteur (1), le premier canal intérieur (9) s'étendant depuis l'orifice d'entrée (7) et se reliant fluidiquement à un deuxième canal intérieur (11) ;
le deuxième canal intérieur (11) présentant une inclinaison d'angle β par rapport à l'axe longitudinal (10) de l'aiguille d'injecteur (1), le deuxième canal intérieur (11) s'étendant jusqu'à l'orifice de sortie (8) ;
dans laquelle la deuxième extrémité (4) comprend une face (12) inclinée à un angle α par rapport à l'axe longitudinal (10) de l'aiguille d'injecteur (1) ;
dans laquelle l'orifice de sortie (8) est disposé sur la face inclinée (12), et dans laquelle le diamètre du premier canal intérieur (9) est supérieur au diamètre du deuxième canal intérieur (11), la différence entre le diamètre du premier canal intérieur (9) et le diamètre du deuxième canal intérieur (11) permet une augmentation de la pression d'eau entre le premier canal intérieur (9) et le deuxième canal intérieur (11) ;
l'aiguille d'injecteur (1) étant **caractérisée en ce que** la partie centrale (6) est dotée d'un évitement (13).

2. Aiguille (1) selon la revendication 1, **caractérisée en ce que** l'angle α est compris dans la plage entre 5° et 90°.

3. Aiguille (1) selon la revendication 1, **caractérisée en ce que** l'angle β est compris dans la plage entre 5° et 90°.

4. Aiguille (1) selon la revendication 1, **caractérisée en ce que** le diamètre du premier canal intérieur (9) est compris dans la plage entre 1,3 mm et 1,8 mm.

5. Aiguille (1) selon la revendication 1, **caractérisée en ce que** le diamètre du deuxième canal intérieur (11) est compris dans la plage entre 0,6 mm et 1,2 mm.

6. Aiguille (1) selon la revendication 1, **caractérisée en ce que** le moyen de fixation (3) est des filetages formés sur la surface de la première extrémité (2) et la pointe (5) est une pointe pointue.
